**Europäisches Patentamt**

**European Patent Office**

**Office européen des brevets**

(19)

(11) Publication number: **0 056 300**
**A1**

(12) # EUROPEAN PATENT APPLICATION

(21) Application number: **82300053.4**

(22) Date of filing: **06.01.82**

(51) Int. Cl.³: **G 06 F 15/46**

(30) Priority: **09.01.81 GB 8100677**

(43) Date of publication of application: **21.07.82**
**Bulletin 82/29**

(84) Designated Contracting States: **AT BE CH DE FR IT LI LU NL SE**

(71) Applicant: **PROGRAMASYST LIMITED, Programasyst House 282, Holdenhurst Road, Bournemouth Dorset, BH8 8AY (GB)**

(72) Inventor: **Drummond, Andrew Francis, 5, Cutlers Place, Wimborne Dorset (GB)**

(54) **Control of real time processes.**

(57) A control apparatus (30) and method for controlling a real time process (or other controllable activity) of which the operation can be defined by a set of P logical statements of the form

$$STATE_{(N)} + OMI_{(N,N+1)} = STATE_{(N+1)} \text{ where}$$

– N may have any integral value up to P,

– $STATE_{(N)}$, $OMI_{(N,N+1)}$ and $STATE_{(N+1)}$ are all logical variables, and

– $OMI_{(N)}$ is the conjunctive OPERATING MODE INCREMENT that is necessary to the progress of the system from $STATE_{(N)}$ to $STATE_{(N+1)}$,
and in which SET only one such STATE variable at a time can be recognised as having the value TRUE; in which apparatus and method the following steps are performed:

(i) evaluating in turn each successive STATE in at least a group of said STATES in the SET on the basis of feedback data relating to current values of various relevant parameters of the process and the current TRUE STATE, by

(a) determining the logical value of the preceding STATE or STATES on which said STATE is dependent,

(b) determining the logical value of the or each OPERATING MODE INCREMENT on which said STATE is dependent, and

(c) evaluating the logical statement defining said STATE, using the logical values just determined for the or each preceding STATE and the associated OPERATING MODE INCREMENT to determine the logical value of said STATE; and

(ii) initiating any relevant and necessary control action on finding a STATE having the logical value TRUE.

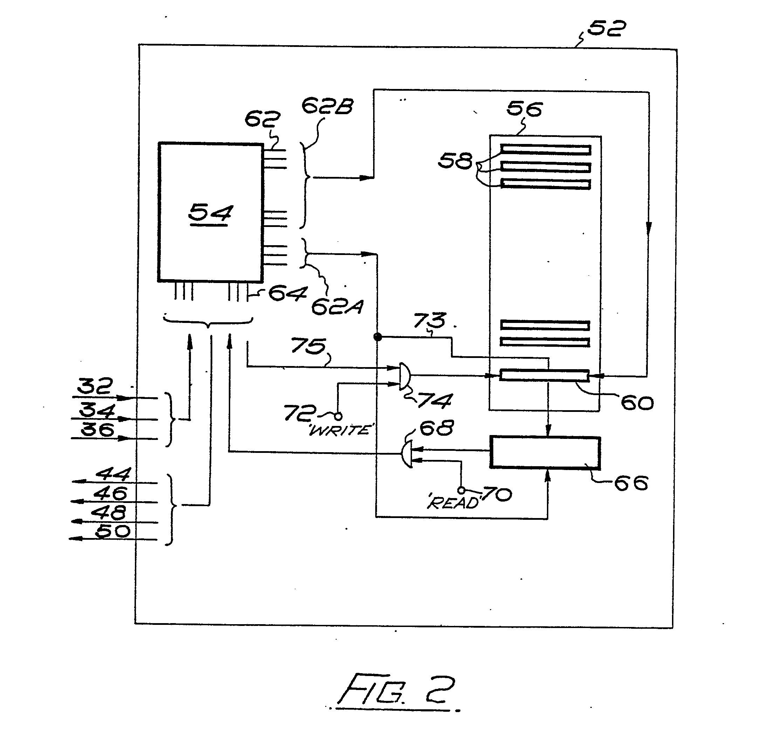

Preferably, the identity of the STATE currently having the TRUE value is stored (Figure 2, location 60), and step (i) (a) above is performed by comparing with that stored identity the identity of the or each said preceding STATE.

The control of a coal-fired furnace (10) by such a method and apparatus (30) is described.

# CONTROL OF REAL TIME PROCESSES

This invention relates to the control of, and means for controlling, in real time the course of an industrial process, or any other form of controllable activity. In what follows, the totality of apparatus (including the means for exercising such control) for performing the process or activity will be referred to as the system.

In carrying on such a process or activity, the system proceeds in real time from one specific, defined operating condition or state in which it is ready for any relevant and necessary next control action to be initiated, to a next such operating state, which next state will be achieved, consequent upon the initiation of a said control action, or upon the occurrence of some other disturbance in the system, only after the occurrence of a defined change or increment in the operating mode of the system.

A means (hereinafter referred to as "the controller") for exercising control of such a process or activity must therefore include means for discerning the attainment of each such next state, and for this purpose said controller must be kept informed of variations in all of the system parameters that influence, or are influenced by, the course of said process. Hence, the system must also include feedback means for feeding back to said controller data representing the values of all said parameters.

Moreover, a said controller has inherently within itself, i.e. by virtue of its present condition, some information concerning the immediate past history of the process, which information can be used by the controller in determining in conjunction with said feedback data a future course of action for further advancing the process in a desired manner.

For simplicity's sake, in what follows

(a) each said defined operating condition or state will be referred to as a SYSTEM STATE, or more simply as a STATE ; and

(b) each said defined change or increment in the operating mode of the system will be referred to as an OPERATING MODE INCREMENT , or OMI.

Thus, each system state can be represented in terms of the preceding system state and the conjunctive operating mode increment that differentiates such system state over said preceding system state.

For any system as aforesaid, the operation of the system can be fully represented as a network of system states linked by associated operating mode increments.

In what follows, all of the possible system states for a given system will be referred to as constituting a SET OF STATES for the system. Such a set of states can be represented in a STATE DIAGRAM for the system, as will be shown and described later.

At any given time, such a system can exist in any one (and one only) state of its set of states, and since each such state is either existent or non-existent (and can therefore be represented by the alternative logical values TRUE or FALSE) for any such system, at any given time  only one such STATE in the set can be represented by the  logical value TRUE, all the other states of the set being represented by the logical value FALSE.

Likewise, an operating mode increment that distinguishes one state  from the next has either been achieved, or not achieved, so that that  operating mode increment can likewise be represented by the alternative logical values TRUE and FALSE.

According to the present invention, there is provided a method of, or apparatus for, controlling or simulating a process, in which method or apparatus:-

(a)  all possible states of the process that are separately identifiable are each represented by a corresponding logical variable of a set of such variables, which set has the property that one, and only one, member of the set may take the value TRUE at any one time , all others inherently then having the value FALSE;

(b)  the operation of the process is represented by maintaining a correspondence between said separately identifiable states of the process and the logical values of the corresponding members of said set; and

(c)   said correspondence is maintained by detecting the required conditions appertaining to the change of state of the process from a given first state to a given next state and accordingly setting the said variable representing the said next state to take the value TRUE, whereupon the variable representing said first state will inherently take the value FALSE.

In a preferred embodiment of the present invention said process is controlled or simulated by a digital processor in which the process is defined by a set of 'P' statements of the form

$$STATE_{(N)} \text{ and } OMI_{(N,N+1)} = STATE_{(N+1)}$$

where − N may have any integral value up to P,

− $STATE_{(N)}$ and $STATE_{(N+1)}$ are each members of a set of P logical variables of which set one and only one member may take the value TRUE at any given time, and

− $OMI_{(N,N+1)}$ is the Operating Mode Increment (also a logical variable) which is set to the value TRUE if the conditions which indicate that the process has proceeded from $STATE_{(N)}$ to a next $STATE_{(N+1)}$ are detected.

Said property of said set of logical variables is preferably realised by (a) storing the identity of the STATE most recently found to have the value TRUE, (b) evaluating any STATE in the set by making a comparison of the identity of said STATE with the identity stored, and (c) allocating the value TRUE to said STATE if the two identities are the same, but the FALSE value otherwise.

The identity of each STATE is advantageously represented by an address in an hypothetical storage unit in which every member of said set is deemed to be stored.

According to a further aspect of the present invention there is provided in or for a said system of which the operation can be defined by a SET of P logical statements of the form:-

$$STATE_{(N)} + OMI_{(N,N+1)} = STATE_{(N+1)}$$

where - N may have any integral value up to P,

- $STATE_{(N)}$, $OMI_{(N,N+1)}$ and $STATE_{(N+1)}$ are all logical variables (i.e. two state variables), and

- $OMI_{(N)}$ is the conjunctive OPERATING MODE INCREMENT that is necessary to the progress of the system from $STATE_{(N)}$ to $STATE_{(N+1)}$,

and in which SET only one such $STATE_{(N)}$ variable at a time can be recognised as having the value TRUE, a control apparatus which comprises:-

(i) storage means for storing the identity of the STATE currently having (i.e. most recently found to have) the logical value
TRUE;

(ii) feedback means, for feeding back current
value data relating to various relevant
parameters of the process;

(iii) STATE evaluating means, for evaluating in
turn each successive STATE in at least a
group of such STATES in said SET on the
basis of said feedback data and said stored
TRUE STATE identity, by

   (a) determining the logical value of the
       preceding STATE or STATES on which said
       STATE is dependent,

   (b) determining the logical value of the or
       each OPERATING MODE INCREMENT on which
       said STATE is dependent, and

   (c) evaluating the logical statement
       defining said STATE, using the logical
       values just determined for the or each
       preceding STATE and the associated
       OPERATING MODE INCREMENT, to determine
       the logical value of said STATE;

(iv) updating means, for storing in place of said
     stored STATE identity, the identity of a
     STATE just found in (c) above to have the
     logical value TRUE;  and

 (v) control action initiating means, for initiating any relevant and necessary control action on finding in (c) above a STATE having the logical value TRUE.

Said STATE evaluating means is preferably arranged to determine the logical value of the or each preceding STATE on which said STATE is dependent by making a comparison of the identity of each such preceding STATE with the identity of the STATE stored in said storage means, said logical value being TRUE only when the compared identities are the same.

Advantageously, said identity of each STATE is represented by the address in a storage unit of the storage location therein in which the actual identity of said STATE in said SET is stored. Since in practice it is unnecessary for said comparison purposes to use said actual identity of a STATE, said storage location may (conveniently and with substantial advantage) comprise simply an hypothetical storage location, allocated to said STATE, in an hypothetical storage unit, or in an hypothetical extension of a storage unit used for the ordinary data processing functions of the apparatus.

According to yet another aspect of the present invention, there is provided a method of controlling a system, as hereinbefore defined, of which the operation can be defined by the aforementioned SET of P logical statements, which method comprises the steps of:-

(i) storing the identity of the STATE currently

-8-

having (i.e. most recently found to have) the logical value TRUE;

(ii) evaluating in turn each successive STATE in at least a group of such STATES in said SET on the basis of feedback data relating to current values of various relevant parameters of the process and said stored TRUE STATE identity, by

(a) determining the logical value of the preceding STATE or STATES on which said STATE is dependent,

(b) determining the logical value of the or each OPERATING MODE INCREMENT on which said STATE is dependent, and

(c) evaluating the logical statement defining said STATE, using the logical values just determined for the or each preceding STATE and the associated OPERATING MODE INCREMENT to determine the logical value of said STATE;

(iii) storing in place of said stored STATE identity the identity of a STATE just found in (c) above to have the logical value TRUE; and

(iv) initiating any relevant and necessary control action on finding a STATE having the logical value TRUE.

Preferably, said step (ii) (a) is performed by making a comparison of the identity of each such preceding STATE with the identity of the stored STATE identity.

Advantageously, the identity of the STATE currently having the TRUE value is stored in a dedicated storage location connected with one input circuit of a comparator; that storage location is activated simultaneously with the supply to a second input circuit of said comparator of the identity of a STATE currently being determined in said step (ii) (a); and the comparator supplies a TRUE or FALSE output signal according to the state of equality or inequality of the compared STATE identities, thereby indicating the logical value of the STATE currently being determined.

The present invention greatly facilitates the efficient and expeditious execution of control programs for real time processes; this is particularly significant when such processes are being controlled by means of micro-processors.

The methods and apparatuses of the present invention may also be used in the simulation of various processes and activities of the various kinds referred to in this Specification.

Other features and advantages of the present invention will appear from the following description, and from the claims appended at the end of that description.

One electric control system embodying the present invention, for controlling the operation of a coal-fired furnace will now be described by way of example, and with reference to the accompanying drawings, in which:-

Figure 1 is a schematic diagram showing the general arrangement of the furnace and its associated control apparatus;

Figure 2 is a schematic diagram showing part of said control apparatus of figure 1;

Figure 3 is a block diagram showing a typical sequence of control states and intervening events that is met in controlling a real time process or other activity; and

Figure 4 is a comprehensive STATE DIAGRAM showing a complete sequence of control states and intervening events in the process of controlling combustion in the said furnace.

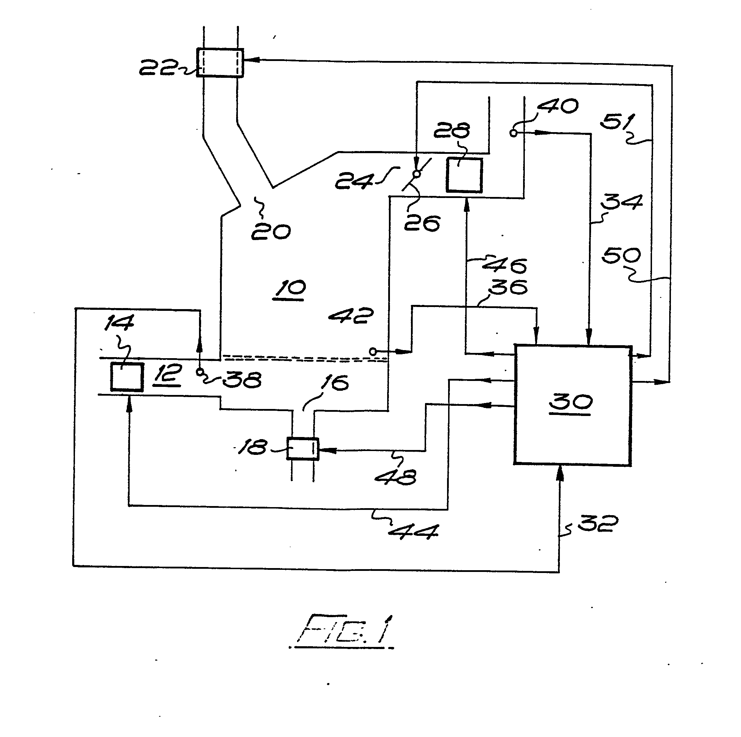

Referring now to Figure 1, the furnace to be controlled has a furnace chamber 10 having an air inlet duct 12 housing a forced draught fan 14, a gas inlet duct 16 controlled by an electrically-controlled on/off valve 18, a coal inlet duct 20 controlled by an electrically-controlled on/off valve 22, and a smoke exit duct 24 incorporating an electrically-controlled damper 26 and an induced draught fan 28.

An electrical control apparatus 30 receives electrical feedback signals via lines 32, 34 and 36 from the following devices:-

(a) a first fan-running (ON) sensing device 38 in the air inlet duct 12;

(b) a second fan-running (ON) sensing device 40 in the smoke outlet duct 24; and

(c) a temperature sensor 42 located in the fire bed of the furnace chamber.

The electrical control apparatus 30 delivers control action-initiating signals via lines 44, 46, 48, 50 and 51 to the following devices:-

(a) the forced draught fan 14;

(b) the induced draught fan 28;

(c) the gas control valve 18;

(d) the coal control valve 22; and

(e) the damper 26.

The electrical control apparatus 30 incorporates, as shown in Figure 2, a controller 52 which comprises essentially a micro-processor 54 (constituting a central processor unit), and an associated memory unit 56 having in addition to a normal series of addressable storage locations 58 for use in normal data processing activities of the processor, a single dedicated addressable storage location 60 which is intended to fulfil a special function that will be explained later in the specification.

The processor 54 has a set of parallel address lines 62 for selecting in accordance with program

-12-

instructions the respective storage locations 58 as required, for use in normal data processing activities, and a set of parallel data lines 64 for transferring data between the processor 54 and the memory unit 56.

The controller 52 also incorporates a comparator 66 which is arranged, on receipt of an appropriate program instruction, to compare a storage location address then stored in the dedicated storage location 60 with another storage location address then supplied to it by a small group 62A (of three) of the address lines 62, the other group 62B of the address lines 62 being used to select (or enable) the dedicated storage location whereby to enable it to deliver its contents to the comparator 66.

The storage location addresses compared in the comparator are preferably (and advantageously) addresses, allocated to the respective STATES, of hypothetical storage locations constituting an hypothetical extension of the memory unit 56.

An output signal (TRUE/FALSE) from the comparator 66 is supplied through an AND gate 68 to the data lines 64 of the processor 54 when an input control signal (READ) is supplied by the processor to a second input circuit 70 of that gate.

The address stored in the dedicated storage location 60 may be changed to the address then present at the address line group 62A by the application of a control pulse (WRITE) to a control input circuit 72 of an AND gate 74 connected between the data lines 64 of the processor 54 and the WRITE-ENABLE input of the dedicated storage location 60, so that the AND gate 74 is enabled only when the data lines 64 indicate via a second input circuit 75 of that gate the logical value TRUE for the STATE just evaluated.

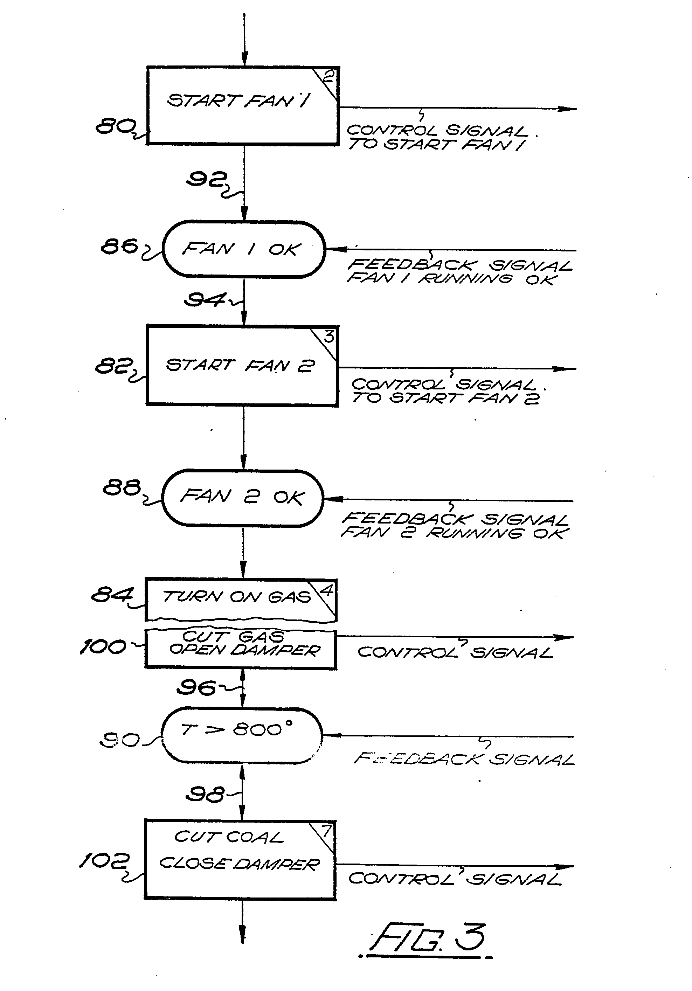

Referring now to the Figure 3, there is schematically illustrated there the matters mentioned in the introductory paragraphs of this specification.   In the rectangular boxes 80, 82, 84, etc. are typical states of readiness (e.g. for the furnace control system), box 80 being a state of readiness for starting a first fan, and box 82 being a state of readiness for starting a second fan.   These boxes are shown as giving rise (at their right-hand sides) to the emission of the necessary control signals (and in some cases indicating signals) to cause the control sequence to progress further, in the case of box 80, for example, by causing fan 1 to be started.

In between the boxes 80, 82, 84, etc. are indicated the necessary operating mode increments that have to occur for the system to reach the respective next states of readiness.   These increments are shown in round-ended envelopes 86,88, 90 to which at their right-hand sides are pointed arrows representing the feedback data that have to be generated in order to indicate that those operating mode increments have been achieved.

Single-headed arrows (typically 92, 94) proceeding down the paper from one state of readiness to another via an associated operating mode increment indicate the direction (i.e. forward direction) in which the control sequence is capable of progressing between those states. Two-headed arrows (typically 96, 98) indicate that the process may progress in either direction between the relevant two states, e.g. 100 and 102.

In each of the STATE boxes 80, 82, 84, etc. the statement there appearing is abbreviated to indicate merely the control action for which the state is the state of readiness when control of the system is progressing in said forward direction. When control of the system is progressing in the reverse direction, at a bi-directional arrow, the control action to be initiated on attainment of a bi-directional STATE is the reverse of that indicated in the STATE box. Thus, on achieving STATE 6 (box 100) from STATE 7 (box 102), the control action to be initiated is "CLOSE DAMPER, TURN GAS ON".

In each of the intervening envelopes 86, 88 and 90 the statement there appearing indicates the operating mode increment which must exist before the system, as seen by the control apparatus 30, changes from its current state to the next state. The operating mode increment is an essential ingredient of such next state for the control apparatus 30.

Each STATE box bears in its upper right-hand corner the identity number of that STATE.

For any system controlling a real time process or other activity, the operation of that system can be represented by a STATE DIAGRAM comprising the various successive readiness STATES and intervening OPERATING MODE INCREMENTS that are experienced during operation of this system. The sequence of readiness STATES and MODE INCREMENTS will close upon itself to form a loop, and there may also be subsidiary loops within the main loop.

For convenience, such a STATE DIAGRAM may omit some or all of the indications of the control signals that have to be emitted, and the feedback data that have to be received.

Such a STATE DIAGRAM will result from an analysis of an equipment or system to be controlled.

From the STATE DIAGRAM it will be appreciated that, providing the analysis has been carried out correctly and fully, the system can exist in, or be following up upon, only one readiness STATE at a time, all the other states of the state diagram being at that time non-existent. Thus, each readiness state can be looked upon as a logical variable, having the possible values TRUE or FALSE according to whether or not the state is currently existent or non-existent for the system.

One state will follow from the preceding state provided the relevant operating mode increment has been achieved, and this will either have been achieved or not so achieved. Thus, each operating mode increment can likewise be looked upon as a logical variable, having a value TRUE or FALSE according to whether that operating mode increment has been achieved or not. Thus, we can write the logical statement:-

$$\text{STATE}_{(N)} + \text{OMI}_{(N,N+1)} = \text{STATE}_{(N+1)}$$

where N is integral and can have any value up to P, the latter being the number of states in the STATE DIAGRAM.

The existence or otherwise of any given state can thus be determined by consideration of the relevant preceding logical states for the system and the feedback data from which the logical values of the said operating

-17-

mode increments can be obtained. The logical value of a state once determined as TRUE can be used in evaluating other logical states which depend upon that state, that is by looking to see whether a state in question is the state last determined to have the TRUE value. If it is, then that state has the TRUE value, otherwise it has the FALSE value. These values are then used in evaluating the relevant STATE using the above logical statement.

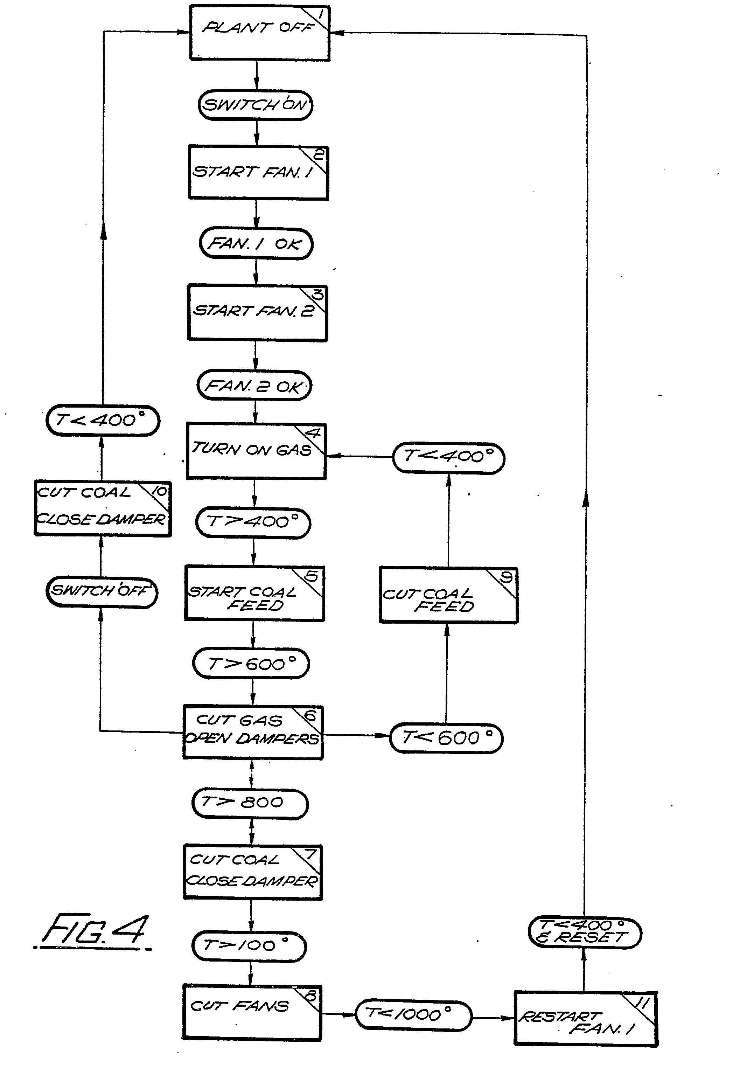

Referring now to the Figure 4, the STATE DIAGRAM for operating the furnace shown in the Figures 1 and 2 in the desired way is set out there. The furnace is intended, in its normal operating mode, to be fired with coal, control of the combustion process being achieved by control of the air supplied to the furnace chamber, by means of damper control and if necessary by fan control. However, to start the furnace, gas is supplied to the furnace chamber until the furnace fire bed has achieved a temperature sufficient to ignite coal. Thereupon the coal supply to the furnace chamber is initiated, and later, on the achievment of a still higher fire bed temperature, the gas supply is cut off.

It is believed that this state diagram will be self-explanatory in the light of the explanation given above with reference to the Figure 3, though mention should be made here of the first state in the diagram.

This is a state of readiness for switching on the system and starting the process. Though for convenience and clarity, that state is designated as 'PLANT OFF', it could be marked alternatively as 'START SYSTEM'.

The logical statements describing the operation of the system may be expressed in a FORTRAN-LIKE programming language as follows:-

ST1  =  (ST10.OR.(ST11.AND.RESET)).AND.(T.LT.400)

ST2  =  ST1.AND.ON

ST3  =  ST2.AND.FAN1OK

ST4  =  (ST3.AND.FAN2OK).OR.(ST9.AND.(T.LT.400))

ST5  =  ST4.AND.(T.GT.400)

ST6  =  (ST5.AND.(T.GT.600)).OR.(ST7.AND.(T.LT.800))

ST7  =  ST6.AND.(T.GT.800)

ST8  =  ST7.AND.(T.GT.1000)

ST9  =  ST6.AND.(T.LT.600)

ST10 =  ST6.AND.NOT.ON

ST11 =  ST8.AND.(T.LT.1000)

where the following items have the following meaning:-

ST1     means    STATE 1

T       means    TEMPERATURE

LT      means    LESS THAN

FAN1OK  means    FAN 1 RUNNING O.K.

GT      means    GREATER THAN

The conditions for the operation of the various control elements (fans, control valves and dampers) are given by the logical statements:-

-19-

FAN1 = .NOT.(ST1.OR.ST8)

FAN2 = .NOT.(ST1.OR.ST8.OR.ST11)

GAS = ST4.OR.ST5

COAL = ST5.OR.ST6

DAMPR = ST6

The processor is provided with an operating program which, inter alia, causes the processor to cyclically evaluate (typically 30 times per second) each statement of the above group of eleven logical statements, whereby to determine which state currently has a TRUE value, and upon finding a change in the state having a TRUE value, to update a storage location (e.g. 60) dedicated to storing the identity of the STATE currently having the TRUE value, and to emit appropriate control signals for controlling the operation of the process being controlled.

In determining the logical values of the successive states, the processor uses the identity of the most recently-determined TRUE STATE to determine the logical values of the earlier states in the set, and assesses from the relevant feedback data the logical values of the relevant operating mode increments. The value of each said earlier state is obtained by comparing its identity with the identity of the STATE currently held in said dedicated storage location, said value being TRUE when the identities equate, otherwise the state value is FALSE.

As an example of how the processor may operate, reference will be made to Figure 2. The processor operates to store in the dedicated storage location 60 at all times the identity of the STATE most recently determined by the processor to have the TRUE value. This is achieved in the following manner.

After evaluating (see later for a description of the evaluation process) the logical value of a STATE, the processor applies (a) UNIT binary signals to each of the address lines 62 in the set 62B whereby to enable the dedicated storage location 60 in readiness for possible modification of its contents, (b) signals corresponding to the identity of the STATE just evaluated to the data input 73 of storage location 60, (c) a WRITE pulse to one input 72 of the AND GATE 74, and (d) a control signal to the other input 75 of AND GATE 74, which signal is TRUE if the STATE just evaluated has been found to be TRUE, or likewise FALSE if the STATE just evaluated has been found to be FALSE.

If the STATE just evaluated has been found to be TRUE, the AND GATE 74 allows the WRITE PULSE applied at input 72 to be fed to the WRITE ENABLE input of storage location 60 thus causing the STATE identity appearing on lines 62A to be written into that storage location as the new, currently TRUE STATE identity. If, however, the STATE just evaluated has been found to be FALSE, no such WRITE PULSE will be fed to the storage location 60, so that its contents will remain unchanged.
In this latter case the identity of the currently
TRUE STATE will remain unchanged.

As mentioned earlier, the identity of an
evaluated STATE and that of the STATE stored in the
dedicated storage location 60 may be the absolute
(i.e. actual) identity of the STATE, (e.g. STATE 6),
though preferably it is the address of an hypothetical
storage location in an hypothetical extension of the
memory unit 56, which hypothetical storage location has
been allocated to that STATE.

In the latter case, the needs of the system
are satisfied expeditiously and efficiently without
having to use extra storage locations in the memory
unit 56 and extra processing time accessing the actual
identity, since the hypothetical address allocated to
the currently TRUE STATE is unique and can be compared
with the hypothetical addresses of the locations
uniquely allocated to the other STATES in the SET.

To evaluate the logical value of a STATE, the
logical value of the (or each) state in the relevant
logical statement is determined by applying the identity
of that particular state to the group 62A of the address
lines and enabling the dedicated storage location 60 via
the group 62B of the address lines thereby to compare in
the comparator 66 that identity with the identity
currently stored in the dedicated storage location 60.

If the two identities are the same, the comparator transmits a TRUE signal back to the processor, which thereupon uses that TRUE signal to evaluate the logical value of the state that is dependent on that state just determined by said comparison. If on the other hand, the said two identities are different, the comparator transmits a FALSE signal back to the processor, which thereupon uses that FALSE value in the evaluation of the state under consideration.

The said operating program for the processor also causes the processor to evaluate the above five logical statements (FAN1, FAN2 etc.) which determine when the respective control elements should be activated or maintained activated, and to emit appropriate control signals for effecting a desired control of the respective control elements.

Summarizing the operation of the processor, the processor operates to determine the logical value of a STATE, say STATE 8, in the following manner:-

(a) it determines the logical value of STATE 7 by comparing the address (as defined by the group 62A of address lines) with the address in the dedicated storage location 60. If the addresses are equal, STATE 7 has the value TRUE, otherwise it has the value FALSE. This information is transmitted back to the processor via the data lines 64;

(b) the processor then determines the logical value of the associated operating mode increment and combines it with the returned value of STATE 7 to ascertain the value of STATE 8;

(c) if STATE 8 has the value TRUE, the processor thereupon emits a WRITE signal to cause the address of STATE 8 to be stored in the dedicated storage location 60 in place of the former stored STATE address.

Though in the system described above hardware has been used to enable the said comparisons and the changing and storing of the STATE currently having the value TRUE, equivalent software means may be used if desired as will appear from what follows:-

1. For use with an "INTEL 8080" micro-processor, it is assumed that the A register will hold the logical value of the STATE, and that the H and L registers will hold the STATE and SET selection numbers, (this assumes that the processor is intended to handle two or more independent SETS of STATE variable statements for operating different process controls simultaneously).

It is also assumed that 256 (i.e. $2^8$) STATES are possible in each of 16 (i.e. $2^4$) possible SETS.

The program runs as follows:-

READ:

```
ENTRY POINT:   MOV A, L   ; L = STATE NUMBER
               MOV L, H   ; Now L = SET NUMBER
               MVI H, 10  ; HL ADDRESSES 1000H + SET NO
```

-24-

```
        CMP M     ; COMPARE STATE STORED WITH

                  ; STATE INTERROGATED

        MVI A, Ø  ; SET A = FALSE

        RNZ       ; RETURN IF COMPARISON UNEQUAL

        MVI A, FF ; ELSE A = TRUE IF COMPARISON

                  ; OK RET       ; RETURN ANYWAY
```

WRITE:

```
ENTRY POINT:  ORA A   ; TEST INCOMING VALUE RP      ; RETURN IF POS.  I.E.FALSE MOV A, L ; ELSE A = STATE NUMBER MOV L, H ; L = SET NUMBER

              MVI H, 1Ø ; HL = 1000H + SET NUMBER MOV M, A ; SET STATE = INCOMING STATE NO RET      ; END
```

2. For use with a "HEWLETT PACKARD 1000"
mini-computer it is assumed that the A register will hold
the logical value of the STATE, while the register B will
hold the STATE and SET SELECTION NUMBERS, and also that
256 STATES are possible in each of 16 possible SETS.

The program runs as follows:-

READ:

```
READ  NOP       ; STORE RETURN ADDRESS LDA B     ;

      AND =B377  ; A NOW HOLDS STATE NUMBER SWP       ; B = STATE NO., A HOLDS COMPOSITE
```

```
        ALF,   ALF      ; SET NO.  IN LOWEST BITS OF A AND   =B17      ; A NOW = SET NUMBER

        ADA   SETØ      ; A ADDRESS RELEVANT SET STORE LDA   A,I       ; A NOW HOLDS CURRENT STATE NO.

        CMB             ; COMPARE WITH INTERROGATING STATE JMP TRUE        ; SAME SO TRUE

        CLA             ; ELSE PUT A FALSE

        JMP READ,I      ; AND END TRUE    CCA             ; IF TRUE PUT A TRUE JMP READ, I     ; AND END
```

ALLOCATE:

```
ALLOC NOP             ; HOLD RETURN ADDRESS SSA,RSS         ; SKIP IF SIGN BIT SET?  I.E. TRUE?

      JMP ALLOC,I     ; ELSE RETURN NOW LDA B           ;

      AND =B377       ;A = STATE NO.

      SWP             ; B = STATE NO. A = COMPOSITE ALF, ALF        ; A HAS SET NO.  IN LOWEST BITS AND =B17        ; A HAS SET NO. ONLY

      ADA SETØ        ; A ADDRESSES RELEVANT SET STORE STB A,I         ; PUT THIS SET STORE TO NEW STATE JMP ALLOC,I     ; AND RETURN
```

Thus it is seen that direct software
implementation of the STATE variable is relatively simple
although it does become necessary to call a subroutine
in order to read or allocate a STATE variable, while
other variables may be read or allocated directly in the normal way.

Though such a software implementation of the inventive concept may be used, it will provide processing that is not quite so fast as that provided by the hardware form of implementation described above. When even faster processing is required to deal with the needs of a particular system to be controlled, microprogramming techniques may be used to handle suitable parts of the program.

Where desired a single processor may be arranged to control two or more simultaneously operating processes, in which case there must be one dedicated storage location (60) for each such process; and in such a case the control program for the processor must identify the particular dedicated storage location and the particular SET of STATES to be used at any particular instant.

Furthermore, whereas the processor has been described as successively evaluating all of the statements in a SET to find the STATE currently having a TRUE value, the control program may be arranged instead to evaluate only those STATES which are closely adjacent to the currently TRUE STATE in the SET and to which the system may progress from its current TRUE STATE.

Control systems embodying the present invention have the following principal advantages, when compared with equivalent prior art systems.

The control program for the processor has a one-for-one correspondence with the original STATE DIAGRAM definition of the required control algorithm as produced by the control system engineer. This allows the program to be written more easily, more efficiently, and with a higher degree of assurance that it will correctly perform the required control. Moreover, that control program has the advantage that its logic is very easily checked (validated) by inspection and comparison against the control engineer's STATE DIAGRAM for the process.

The complexity of the control program for the processor varies directly with the complexity of the STATE DIAGRAM of the process to be controlled. This contrasts favourably with that of a control program for a control processor which program is devised according to the normal prior art technique for controlling a real time process, in which technique for any increase in the complexity of the STATE DIAGRAM there is a related dispropor-tionately large increase in the complexity of the control program.

The reduced complexity of the control programs for a processor according to the present invention leads to substantial reductions in the storage requirement for the program, and in the execution time of the program.

Though the invention has been described in relation to the control of a real time process of an industrial character (furnace temperature control), the invention may also be applied to other systems of controlled activity which involve in some way:-

(a) the passage of time in which reactions may occur in response to control actions;

(b) the feedback of data defining the behaviour of the system in response to control actions taken earlier or other system disturbances;   and

(c) the taking of other control actions (whether of a corrective or instigational nature) in response to the data fed back.

Such other control systems may relate, for example, to military, ecological, or economic modelling systems.

0056300

CLAIMS:

1.        A method of, or apparatus for, controlling or simulating a process, in which method or apparatus:-

(a)   all possible states of the process that are separately identifiable are each represented by a corresponding logical variable of a set of such variables, which set has the property that one, and only one, member of the set may take the value TRUE at any one time, all others inherently then having the value FALSE;

(b)   the operation of the process is represented by maintaining a correspondence between said separately identifiable states of the process and the logical values of the corresponding members of said set; and

(c)   said correspondence is maintained by detecting the required conditions appertaining to the change of state of the process from a given first state to a given next state and accordingly setting the said variable representing the said next state to take the value TRUE, whereupon the variable representing said first state will inherently take the value FALSE.

2.        A method, or apparatus, according to Claim 1, in which said process is controlled or simulated by a digital processor in which the process is defined by a set of 'P' statements of the form

$$\text{STATE}_{(N)} \text{ and } \text{OMI}_{(N,N+1)} = \text{STATE}_{(N+1)}$$

where - N may have any integral value up to P,

    - $\text{STATE}_{(N)}$ and $\text{STATE}_{(N+1)}$ are each members of a set of P logical variables of which set one and only one member may take the value TRUE at any given time, and

    - $\text{OMI}_{(N,N+1)}$ is the Operating Mode Increment (also a logical variable) which is set to the value TRUE if the conditions which indicate that the process has proceeded from $\text{STATE}_{(N)}$ to a next $\text{STATE}_{(N+1)}$ are detected.

3.      A method, or apparatus, according to Claim 2, wherein the said property of said set of logical vaiables is realised by (a) storing the identity of the STATE most recently found to have the value TRUE, (b) evaluating any STATE in the set by making a comparison of the identity of said STATE with the identity stored, and (c) allocating the value TRUE to said STATE if the two identities are the same, but the FALSE value otherwise.

4.      A method, or apparatus, according to Claim 3, wherein the identity of each STATE is represented by an address in an hypothetical storage unit in which every member of said set is deemed to be stored.

5.      A control apparatus in or for a system, as hereinbefore defined, of which the operation can be defined by a SET of P logical statements of the form:-

$$STATE_{(N)} + OMI_{(N,N+1)} = STATE_{(N+1)}$$

where - N may have any integral value up to P,

    - $STATE_{(N)}$, $OMI_{(N,N+1)}$ and $STATE_{(N+1)}$ are all logical variables, and

    - $OMI_{(N)}$ is the conjunctive OPERATING MODE INCREMENT that is necessary to the progress of the system from $STATE_{(N)}$ to $STATE_{(N+1)}$,

and in which SET only one such STATE variable at a time can be recognised as having the value TRUE;

said apparatus comprising:-

    (i) feedback means, for feeding back current value data relating to various relevant parameters of the process;

    (ii) STATE evaluating means, for determining on the basis of said feedback data and the current TRUE STATE the logical value of a said STATE and the associated OPERATING MODE INCREMENT, and from those logical values - the logical value of the next STATE in the SET, and for repeating the above determination process for each successive next STATE in at least a group of such STATES; and

    (iii) control action-initiating means, responsive to a determination that a STATE has the TRUE value, for initiating thereupon any relevant and

0056300

-32-

necessary control action appropriate to that TRUE value STATE.

6.      A control apparatus according to Claim 5, wherein the identity of the STATE currently having a TRUE value is stored in a storage device; wherein said STATE evaluating means is arranged to determine the logical value of the said STATE by making a comparison of the identity of that STATE with that currently stored in said storage device, said logical value being TRUE only when the compared identities are the same as one another; and wherein said control action-initiating means is arranged to store in said storage device the identity of the STATE newly found to have the value TRUE in place of the previously stored STATE identity.

7.      A control apparatus according to Claim 5 or 6, wherein the identity of a STATE is represented by a storage location address allocated to that STATE.

8.      A control apparatus according to Claim 7, wherein said storage location address is an address of an hypothetical storage location in an hypothetical storage unit, or in an hypothetical extension of a storage unit used for the ordinary data processing functions of the control apparatus.

9.      A control apparatus according to any one of the Claims 5 to 8, wherein said STATE evaluating means and said control action-initiating means are together constituted by a suitably-programmed micro-processor or other programmable data processing apparatus.

10.      A control apparatus according to Claim 9, wherein said micro-processor operates in conjunction with an addressable storage unit and has a plurality of address lines for addressing the respective storage locations of that unit, and wherein a first group of said address lines is used to address a single dedicated storage location, which location constitutes said storage device, a second group of said address lines is used to supply the identity of each successive STATE for comparison in a comparator in turn with the STATE identity stored in said dedicated storage location, said comparator having output circuit means for indicating the logical value of a STATE identified by said second group of address lines.

11.      A method of controlling a system, as hereinbefore defined, of which the operation can be defined by a SET of P logical statements of the form set out in Claim 5, which method comprises the steps of:-

    (i) evaluating in turn each successive STATE in at
        least a group of such STATES in said SET on the
        basis of feedback data relating to current
        values of various relevant parameters of the
        process and the current TRUE STATE, by

    (a) determining the logical value of the
        preceding STATE or STATES on which said
        STATE is dependent,

(b) determining the logical value of the or each OPERATING MODE INCREMENT on which said STATE is dependent, and

(c) evaluating the logical statement defining said STATE, using the logical values just determined for the or each preceding STATE and the associated OPERATING MODE INCREMENT to determine the logical value of said STATE, and

(ii) initiating any relevant and necessary control action on finding a STATE having the logical value TRUE.

12.      A method according to Claim 11, wherein the identity of each STATE is represented by a storage location address allocated to that STATE.

13.    ·   A method according to Claim 12, wherein said storage location address is an address of an hypothetical storage location in an hypothetical storage unit, or in an hypothetical extension of a storage unit used for the ordinary data processing functions of the system.

14.      A control apparatus in or for a system, as hereinbefore defined, of which the operation can be defined by a SET of P logical statements of the form set out in Claim 5, which apparatus comprises:-

(i) storage means, for storing the identity of the STATE currently having (i.e. most recently found to have) the logical value TRUE;

(ii) feedback means, for feeding back current value
data relating to various relevant parameters
of the process;

(iii) STATE evaluating means, for evaluating in turn
each successive STATE in at least a group of
such STATES in said SET on the basis of said
feedback data and said stored TRUE STATE
identity, by

(a) determining the logical value of the
preceding STATE or STATES on which said
STATE is dependent,

(b) determining the logical value of the or
each OPERATING MODE INCREMENT on which said
STATE is dependent, and

(c) evaluating the logical statement defining
said STATE, using the logical values just
determined for the or each preceding STATE
and the associated OPERATING MODE INCREMENT,
to determine the logical value of said
STATE;

(iv) updating means, for storing in place of said
stored STATE identity, the identity of a STATE
just found in (c) above to have the logical
value TRUE;   and

(v) control action-initiating means, for
initiating any relevant and necessary control
action on finding in (c) above a STATE having the logical value TRUE.

15.     A control apparatus according to Claim 14, wherein said STATE evaluating means is arranged to determine the logical value of the or each preceding STATE on which said STATE is dependent by making a comparison of the identity of each such preceding STATE with the identity of the STATE stored in said storage means, said logical value being TRUE only when the compared identities are the same.

16.     A control apparatus according to Claim 14 or 15, wherein said identity of each STATE is represented by a storage location address allocated to that STATE.

17.     A control apparatus according to Claim 16, wherein said storage location address is an address of an hypothetical storage location in an hypothetical storage unit, or in an hypothetical extension of a storage unit used for the ordinary data processing functions of the control apparatus.

18.     A control apparatus according to Claim 15, or Claim 16 or 17 when dependent on Claim 15, wherein said storage means comprises a dedicated addressable storage location in an addressable storage unit, and said STATE evaluating means includes a comparator having one input circuit thereof connected to receive from said dedicated storage location the STATE identity stored therein, and a second input circuit thereof connected to receive from a first group of address lines the identity of a STATE of which the logical value is to be determined, and an output circuit at which the logical values TRUE and FALSE can be represented, said dedicated storage location being addressable by a second group of address lines.

19.     A control apparatus according to Claim 18, wherein said first group of address lines is also connected to supply to said dedicated storage location the identity of said STATE just found to have TRUE value for storage therein when an enabling signal is received by that dedicated storage location.

20.     A control apparatus according to any one of the Claims 14 to 17, wherein said STATE evaluating means and said control action-initiating means are together constituted by a micro-processor or other programmable data processing apparatus.

21.     A control apparatus according to Claim 18 or 19, wherein said STATE evaluating means and said control action-initiating means are together constituted by a micro-processor, and wherein said first and second groups of address lines comprise the address lines of said processor, and said output circuit of said comparator is connected to a data input circuit of the processor.

22.     A method of controlling a system, as hereinbefore defined, of which the operation can be defined by a SET of P logical statements of the form set out in Claim 5, which method comprises the steps of:-

(i) storing the identity of the STATE currently having (i.e. most recently found to have) the logical value TRUE;

(ii) evaluating in turn each successive STATE in at least a group of such STATES in said SET on the basis of feedback data relating to current values of various relevant parameters of the process and said stored TRUE STATE identity, by

(a) determining the logical value of the preceding STATE or STATES on which said STATE is dependent,

(b) determining the logical value of the or each OPERATING MODE INCREMENT on which said STATE is dependent, and

(c) evaluating the logical statement defining said STATE, using the logical values just determined for the or each preceding STATE and the associated OPERATING MODE INCREMENT to determine the logical value of said STATE;

(iii) storing in place of said stored STATE identity the identity of a STATE just found in (c) above to have the logical value TRUE; and

(iv) initiating any relevant and necessary control action on finding a STATE having the logical value TRUE.

23. A method according to Claim 22, wherein the said step (ii) (a) is performed by making a comparison of the identity of each such preceding STATE with the identity of the stored STATE identity.

24. A method according to Claim 22 or Claim 23, wherein the identity of each STATE is represented by a storage location address allocated to that STATE.

25. A method according to Claim 24, wherein said storage location address is an address of an hypothetical storage location in an hypothetical storage unit, or in an hypothetical extension of a storage unit used for the ordinary data processing functions of the system.

26. A method according to any one of the Claims 22 to 25, wherein the identity of the STATE currently having the TRUE value is stored in a dedicated storage location connected with one input circuit of a comparator, and wherein that storage location is activated simultaneously with the supply to a second input circuit of said comparator of the identity of a STATE currently being determined in said step (ii) (a), and wherein the comparator supplies a TRUE or FALSE output signal according to the state of equality or inequality of the compared STATE identities, thereby indicating the logical value of the STATE currently being determined.

27. A method according to Claim 26, wherein on evaluating in said step (ii) (c) said logical statement to determine the logical value of said STATE, and finding said STATE to have said logical value TRUE, the identity of said STATE is supplied to said dedicated storage location for storage therein in place of the previously stored STATE identity.

28. A method of, or apparatus for, controlling or simulating a process according to any one of the Claims 1 to 4, substantially as hereinbefore described with reference to, and as illustrated by, the accompanying drawings.

29. A control apparatus in or for controlling a system, as hereinbefore defined, according to any one of the Claims 5 to 10, and 14 to 21, substantially as hereinbefore described with reference to, and as illustrated by, the accompanying drawings.

30. A method of controlling a process or other controllable activity, according to any one of the Claims 11 to 13, and 22 to 27, substantially as hereinbefore described with reference to, and as illustrated by, the accompanying drawings.

31. A system, as hereinbefore defined, controlled by a control apparatus according to any one of the Claims 1 to 10, 14 to 21, 28 and 29, or by a method according to any one of the Claims 1 to 4, 11 to 13, 22 to 27, 28 and 30.

_FIG.1_

0056300

_FIG. 2_

0056300

START FAN 1  2

80  CONTROL SIGNAL
TO START FAN 1

92

86  FAN 1 OK  FEEDBACK SIGNAL
FAN 1 RUNNING OK

94

START FAN 2  3

82  CONTROL SIGNAL
TO START FAN 2

88  FAN 2 OK  FEEDBACK SIGNAL
FAN 2 RUNNING OK

84  TURN ON GAS  4

100  CUT GAS
OPEN DAMPER  CONTROL SIGNAL

96

90  T > 800°  FEEDBACK SIGNAL

98

CUT COAL
CLOSE DAMPER  7

102  CONTROL SIGNAL

FIG. 3

FIG.4

| Category | Citation of document with indication, where appropriate, of relevant passages | Relevant to claim |
|---|---|---|
| X | FR - A - 2 321 722 (CIBIE) <br><br> * page 2, line 32 to page 3, line 20; page 4, line 25 to page 6, line 23; figure 1 * | 1-27 |
| X | DE - A - 2 714 069 (INSURANCE TECHNICAL BUREAU) <br><br> * page 14, line 21 to page 15, line 4; page 22, line 30 to page 23, line 4; page 25, lines 1-19; figures 2,3 * | 1 |
| X | DATENVERARBEITUNG AEG-TELEFUNKEN, vol.7, no.2/3, 1975 BERLIN (DE) J. DONERT et al.:"SA 80, ein Programmpaket für digitale Steuerungen" pages 54-57 <br><br> * page 55, middel column, lines 1-31 * | 1-27 |

**DOCUMENTS CONSIDERED TO BE RELEVANT**

**CLASSIFICATION OF THE APPLICATION (Int. Cl. 3)**

G 06 F 15/46

**TECHNICAL FIELDS SEARCHED (Int.Cl. 3)**

G 06 F 15/46
G 05 B 19/04

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 14-4-1982 | BURGAUD |

EPO Form 1503.1  06.78